# FASCICULE DE BREVET EUROPEEN

(11) **EP 4 277 832 B1**
(45) Date de publication et mention de la délivrance du brevet: **28.01.2026**
(21) Numéro de dépôt: 21851673.0
(22) Date de dépôt: 14.12.2021
(51) Int. Cl.: B62D 25/04

(54) **VEHICULE À STRUCTURE À ELEMENT À RAIDEUR VARIABLE**
FAHRZEUG MIT EINER STRUKTUR AUS ELEMENTEN MIT VARIABLER STEIFIGKEIT
VEHICLE WITH VARIABLE STIFFNESS ELEMENT STRUCTURE

(30) Priorité: 13.01.2021 FR 2100283
(43) Date de publication de la demande: 22.11.2023
(73) Titulaire: Stellantis Auto SAS, 78300 Poissy (FR)
(72) Inventeur: THOR, Tou, 25150 Pont de Roide Vermondans (FR); BORNIER, Paul, 70400 Luze (FR); FONFREDE, Stéphane, 90000 Belfort (FR)
(74) Mandataire: BCIP
(86) Numéro de dépôt international: PCT/FR2021/052321
(87) Numéro de publication internationale: WO 2022/152988

(56) Documents cités:
- EP-B1- 2 310 246
- WO-A1-2015/077185
- FR-A1- 2 890 361
- FR-A1- 2 933 059
- FR-A1- 2 979 608
- US-A- 5 671 968
- US-B2- 7 815 247
- US-B2- 8 651 562

## Description

### Domaine technique de l'invention

La présente invention revendique la priorité de la demande française 2100283 déposée le 13 Janvier 2021.

L'invention concerne les véhicules, éventuellement de type automobile, et plus précisément les structures que comprennent ces véhicules.

### Etat de la technique

De nombreux véhicules, généralement de type automobile, comprennent une structure comportant au moins un élément (structurel) comprenant des première et seconde parties se prolongeant mutuellement au niveau d'une ligne de soudure. Dans certaines de ces structures, les première et seconde parties de l'élément présentent respectivement une première raideur et une deuxième raideur strictement supérieure à la première raideur de manière se déformer différemment en cas de choc subi par l'élément suivant une direction sensiblement transversale. C'est par exemple le cas lorsque l'élément structurel est un pied milieu, car il est souhaité qu'en cas de choc transversal sa première partie, qui s'étend jusqu'à une hauteur où est situé le bassin d'un passager, puisse se déformer plus que sa seconde partie, qui s'étend jusqu'à une hauteur où sont situés l'abdomen et le thorax de ce passager. Mais cela peut aussi être le cas lorsque l'élément structurel est un pied avant ou arrière, un arc de pavillon ou un longeron, par exemple.

Parfois, on est contraint de donner à la seconde partie de l'élément structurel une forme allant en s'affinant, et donc sa section diminue généralement de façon continue. Dans ce cas, on est contraint de loger un insert de raidissement (ou « raidisseur ») dans un logement que comprend la seconde partie de l'élément structurel afin d'augmenter sa deuxième raideur et ainsi assurer son intégrité en cas de choc transversal. Par exemple, lorsque l'élément structurel est un pied milieu cela permet de préserver l'espace de survie du passager voisin pendant le choc transversal.

Cependant, comme cela est notamment décrit dans le document brevet EP-B1 2310246, l'insert de raidissement s'étend actuellement dans la seconde partie de l'élément structurel sensiblement jusqu'à la ligne de soudure (interface avec la première partie). Par conséquent, lors d'un choc les déformations se concentrent autour de la ligne de soudure ce qui peut entraîner une rupture de l'élément structurel au niveau de cette dernière alors que l'on recherche une déformation maximale au niveau de la première partie. En d'autres termes, la présence de l'insert de raidissement rend le comportement de l'élément structurel difficile à maîtriser pendant un choc transversal.

Le document FR 2 979 608 A1 divulgue un dispositif de renforcement latéral pour un montant central d'un côté de caisse de véhicule automobile, incluant des couches de renforcement.

Afin de mieux maîtriser ce comportement il a été proposé de réaliser l'élément structurel en une seule pièce (sans ligne de soudure) soit avec plusieurs épaisseurs différentes grâce à un laminage contrôlé, soit avec plusieurs raideurs différentes grâce à des traitements thermiques locaux différents. Mais ces deux solutions s'avèrent extrêmement couteuses et donc induisent une augmentation notable du coût de fabrication de la structure.

L'invention a donc notamment pour but d'améliorer la situation, sans que cela n'induise d'augmentation notable du coût de fabrication de la structure.

### Présentation de l'invention

Elle propose notamment à cet effet un véhicule comprenant une structure comportant au moins un élément comprenant des première et seconde parties se prolongeant mutuellement au niveau d'une ligne de soudure et présentant respectivement une première raideur et une deuxième raideur strictement supérieure à la première raideur.

Ce véhicule se caractérise par le fait que les première et seconde parties de l'élément définissent ensemble un logement logeant un insert de raidissement qui s'étend de part et d'autre de la ligne de soudure afin d'éloigner de cette dernière des contraintes subies par l'élément en cas de choc, en les décalant dans la première partie.

Grâce à cet insert de raidissement qui s'étend aussi dans la première partie de l'élément structurel, au-delà de la ligne de soudure, lors d'un choc les déformations se concentrent dans la première partie (la plus facilement déformable) et donc il n'y a plus de risque de rupture de l'élément structurel au niveau de cette ligne de soudure.

Le véhicule selon l'invention est défini par la revendication 1 et peut comporter d'autres caractéristiques qui peuvent être prises séparément ou en combinaison, et notamment :
- dans un mode de réalisation, la quatrième raideur peut être strictement supérieure à la troisième raideur ;
- en présence de la dernière option, l'insert de raidissement peut aussi comprendre une seconde paroi ayant une section qui présente dans la partie intermédiaire une seconde diminution puis une seconde augmentation sur une seconde distance choisie de sorte que sa troisième raideur soit strictement inférieure à la cinquième raideur ;
- en présence des deux sous-options précédentes, la première distance peut être strictement supérieure à la seconde distance, ou bien les première et seconde distances peuvent être identiques ;
- l'insert de raidissement peut s'étendre dans la première partie jusqu'à une distance choisie de la ligne de soudure ;
- l'élément peut être un pied milieu ;
- il peut être de type automobile.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où la présence de certains niveaux de gris), sur lesquels :
[Fig. 1] illustre schématiquement, dans une vue de côté, une partie gauche d'un exemple de structure de véhicule selon l'invention,
[Fig. 2] illustre schématiquement, dans une première vue en perspective et en transparence, l'élément structurel de la structure de véhicule de la figure 1,
[Fig. 3] illustre schématiquement, dans une deuxième vue en perspective et en transparence, l'élément structurel de la structure de véhicule de la figure 1, et
[Fig. 4] illustre schématiquement, dans une troisième vue en perspective et en transparence, l'élément structurel de la structure de véhicule de la figure 1.

### Description détaillée de l'invention

L'invention a notamment pour but de proposer un véhicule V comprenant une structure SV comportant au moins un élément (structurel) ES comprenant des première P1 et seconde P2 parties se prolongeant mutuellement au niveau d'une ligne de soudure LS et dont le comportement (mécanique) est maîtrisable pendant un choc transversal.

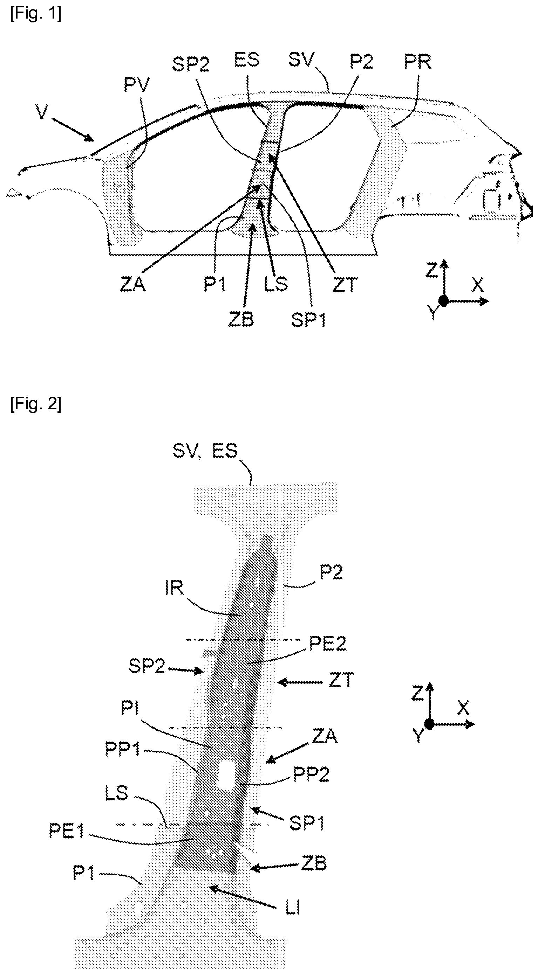

Dans ce qui suit, on considère, à titre d'exemple illustratif, que le véhicule V est de type automobile. Il s'agit par exemple d'une voiture, comme illustré non limitativement sur la figure 1. Mais l'invention n'est pas limitée à ce type de véhicule. Elle concerne en effet tout type de véhicule comprenant une structure comportant au moins un élément structurel comprenant des première et seconde parties se prolongeant mutuellement au niveau d'une ligne de soudure.

Par ailleurs, on considère dans ce qui suit, à titre d'exemple illustratif, que l'élément structurel ES est un pied milieu d'une structure SV d'un véhicule V. Mais l'invention n'est pas limitée à ce type d'élément structurel ES. Elle concerne en effet tout type d'élément structurel comprenant des première et seconde parties se prolongeant mutuellement au niveau d'une ligne de soudure. Ainsi, lorsque la structure fait partie d'un véhicule automobile, l'élément structurel peut aussi être un pied avant PV ou un pied arrière PR ou un arc de pavillon ou encore un longeron, par exemple.

Sur les figures 1 à 4 la direction X est la direction longitudinale du véhicule V, laquelle est parallèle aux côtés latéraux comportant les portières latérales, la direction Y est la direction transversale du véhicule V, laquelle est perpendiculaire à la direction X, et la direction Z est la direction verticale du véhicule V, laquelle est perpendiculaire aux directions longitudinale X et transversale Y.

On a schématiquement illustré sur la figure 1 une partie gauche d'un exemple de structure SV d'un véhicule V selon l'invention. Comme illustré, cette structure SV comprend sur son côté gauche un élément structurel ES (ici un pied milieu) comprenant des première P1 et seconde P2 parties se prolongeant mutuellement au niveau d'une ligne de soudure LS. On notera que cette structure SV comprend sur son côté droit un autre élément structurel ES (pied milieu) du même type que celui du côté gauche.

Les première P1 et seconde P2 parties sont soudées l'une à l'autre par la ligne de soudure LS. La première partie P1 présente une première raideur r1. La seconde partie P2 présente une deuxième raideur r2 qui est strictement supérieure à la première raideur r1 afin d'être moins déformable que la première partie P1 en cas de choc (transversal). On notera que dans un véhicule la pièce, constituée par les première P1 et seconde P2 parties soudées et faisant partie du pied milieu ES, est parfois appelée « renfort de pied ».

De plus, les première P1 et seconde P2 parties définissent ensemble un logement LI qui loge un insert de raidissement (ou raidisseur) IR s'étendant de part et d'autre de la ligne de soudure LS. Cet agencement permet d'éloigner de la ligne de soudure LS des contraintes subies par l'élément structurel ES en cas de choc (transversal), en les décalant dans la première partie P1. En d'autres termes, la pièce (P1, P2) constitue un corps creux là où est défini le logement LI dans lequel est installé l'insert de raidissement IR qui, du fait qu'il est situé à la fois dans la première partie P1 et dans la seconde partie P2, permet d'éviter que la ligne de soudure LS encaisse les contraintes du choc, celles-ci étant en effet désormais décalées dans la première partie P1 qui est la moins raide afin de pouvoir offrir la plus grande déformation pendant ce choc. Ainsi, il n'y a plus de risque de rupture de l'élément structurel ES au niveau de la ligne de soudure LS.

On notera que la différence de raideur entre les première P1 et seconde P2 parties (soudées) peut résulter de l'utilisation de matériaux ayant des ductilités différentes.

On notera également que l'insert de raidissement IR peut s'étendre dans la première partie P1 jusqu'à une distance choisie de la ligne de soudure LS. Ce choix de distance permet de maîtriser avec précision la zone de la première partie dans laquelle on veut concentrer les contraintes en cas de choc transversal.

Lorsque l'élément structurel ES est un pied milieu de véhicule automobile V, il est souhaitable qu'il offre un niveau de déformation maximal dans la première partie P1, c'est-à-dire au niveau de la zone ZB où est situé le bassin d'un passager, un niveau de déformation intermédiaire dans une première sous-partie SP1 de la seconde partie P2 qui prolonge la première partie P1, c'est-à-dire au niveau de la zone ZA où est situé l'abdomen de ce passager, et un niveau de déformation minimal dans une seconde sous-partie SP2 de la seconde partie P2 qui prolonge la première sous-partie SP1, c'est-à-dire au niveau de la zone ZT où est situé le thorax de ce passager. Au moins deux modes de réalisation peuvent être envisagés pour que l'élément structurel ES soit capable de présenter trois niveaux de déformation différents (et donc trois raideurs différentes).

Dans un premier mode de réalisation, illustré non limitativement sur les figures 2 à 4, l'insert de raidissement IR peut comprendre des première PE1 et seconde PE2 parties d'extrémité respectivement situées dans la première partie P1 et la seconde sous-partie SP2 de la seconde partie P2, et une partie intermédiaire PI, située dans la première sous-partie SP1 de la seconde partie P2 et intercalée entre les première PE1 et seconde PE2 parties d'extrémité. Dans ce cas, la partie intermédiaire PI présente une troisième raideur r3, et les première PE1 et seconde PE2 parties d'extrémité présentent respectivement des quatrième r4 et cinquième r5 raideurs, avec la cinquième raideur r5 strictement supérieure à la troisième raideur r3. On a alors les relations suivantes : r1 < r2, r3 < r5 et (r1, r4) < (r2, r3). Ainsi, la combinaison des première r1 et quatrième r4 raideurs permet un niveau de déformation maximal dans la zone du bassin ZB (associée à (P1, PE1)), la combinaison des deuxième r2 et troisième r3 raideurs permet un niveau de déformation intermédiaire dans la zone de l'abdomen ZA (associée à (SP1, PI)), et la combinaison des deuxième r2 et cinquième r5 raideurs permet un niveau de déformation minimal dans la zone du thorax ZT (associée à (SP2, PE2)).

Par exemple, la quatrième raideur r4 peut être strictement supérieure à la troisième raideur r3. Mais cela n'est pas obligatoire. En effet, ce qui est important c'est que la combinaison de raideurs (r1, r4) soit strictement inférieure à la combinaison de raideurs (r2, r3) et que cette dernière soit strictement inférieure à la combinaison de raideurs (r2, r5).

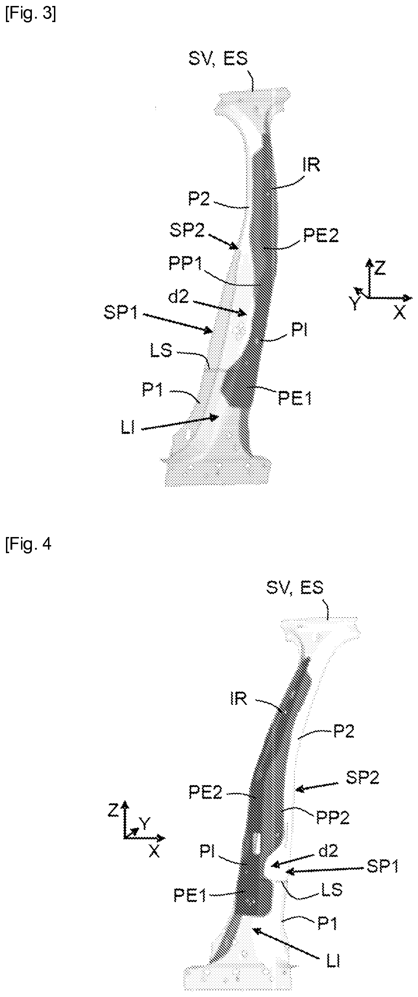

Afin d'obtenir ces variations de raideur (et donc de déformation), l'insert de raidissement IR peut comprendre, comme illustré non limitativement sur la figure 3, une première paroi PP1 de forme particulière et grossièrement contenue dans un plan YZ. Plus précisément, cette première paroi PP1 peut avoir une section (dans le plan XY) qui présente dans la partie intermédiaire PI une première diminution puis une première augmentation sur une première distance choisie de sorte que la troisième raideur r3 de la partie intermédiaire PI de l'insert de raidissement IR soit strictement inférieure à la cinquième raideur r5 de la seconde partie d'extrémité PE2 de l'insert de raidissement IR. Sur la figure 3 cette première diminution suivie de la première augmentation correspond au premier décrochement de la première paroi PP1, référencé d1.

Afin d'accentuer les variations de raideur (et donc de déformation), l'insert de raidissement IR peut aussi comprendre, comme illustré non limitativement sur la figure 4, une seconde paroi PP2 de forme particulière et grossièrement contenue dans un autre plan YZ. Plus précisément, cette seconde paroi PP2 peut avoir une section (dans le plan XY) qui présente dans la partie intermédiaire PI une seconde diminution puis une seconde augmentation sur une seconde distance choisie de sorte que la troisième raideur r3 de la partie intermédiaire PI de l'insert de raidissement IR soit strictement inférieure à la cinquième raideur r5 de la seconde partie d'extrémité PE2 de l'insert de raidissement IR. Sur la figure 4 cette seconde diminution suivie de la seconde augmentation correspond au second décrochement de la seconde paroi PP2, référencé d2.

On notera que dans l'exemple illustré non limitativement sur les figures 3 et 4, la première distance (ici suivant la direction verticale Z) est strictement supérieure à la seconde distance. En d'autres termes, les premier d1 et second d2 décrochements sont dissymétriques afin de favoriser une déformation dans la zone d'abdomen ZA qui n'est pas purement transversale (c'est-à-dire suivant la direction transversale Y). En fait, ici la première paroi PP1 est celle qui est la plus proche de l'avant du véhicule V, et par conséquent on favorise une déformation ayant une composante transversale et une composante longitudinale vers l'avant (c'est-à-dire suivant la direction longitudinale X) dans la zone d'abdomen ZA. Mais dans une première variante non illustrée, la première distance pourrait être strictement inférieure à la seconde distance afin de favoriser une déformation ayant une composante transversale et une composante longitudinale vers l'arrière dans la zone d'abdomen ZA.

Dans une seconde variante non illustrée, les première et seconde distances pourraient être identiques. Dans ce cas, les premier d1 et second d2 décrochements sont identiques afin de favoriser une déformation purement transversale dans la zone d'abdomen ZA.

Dans un second mode de réalisation (non illustré), la seconde partie P2 de l'élément structurel ES peut comprendre une première sous-partie SP1, prolongeant la première partie P1 et présentant la deuxième raideur r2, et une seconde sous-partie SP2, prolongeant la première sous-partie SP1 et présentant une troisième raideur r3 strictement supérieure à la deuxième raideur r2. On comprendra que dans ce second mode de réalisation on n'a pas besoin de faire varier la raideur de l'insert de raidissement IR, car on fait varier la raideur dans les première SP1 et seconde SP2 sous-parties de la seconde partie P2 de l'élément structurel ES, par exemple en faisant varier leurs épaisseurs par un laminage contrôlé ou en leur appliquant des traitements thermiques différents.

## Revendications

1. Véhicule (V) comprenant une structure (SV) comportant au moins un élément (ES) comprenant des première (P1) et seconde (P2) parties se prolongeant mutuellement au niveau d'une ligne de soudure (LS) et présentant respectivement une première raideur et une deuxième raideur strictement supérieure à ladite première raideur, lesdites première (P1) et seconde (P2) parties définissant ensemble un logement (LI) logeant un insert de raidissement (IR) s'étendant de part et d'autre de ladite ligne de soudure (LS) afin d'éloigner de cette dernière (LS) des contraintes subies par ledit élément (ES) en cas de choc, en les décalant dans ladite première partie (P1), ladite seconde partie (P2) de l'élément (ES) comprenant une première sous-partie (SP1), prolongeant ladite première partie (P1), et une seconde sous-partie (SP2), prolongeant ladite première sous-partie (SP1), et ledit insert de raidissement (IR) comprend une partie intermédiaire (PI), située dans ladite première sous-partie (SP1), présentant une troisième raideur, et intercalée entre des première (PE1) et seconde (PE2) parties d'extrémité respectivement situées dans ladite première partie (P1) et ladite seconde sous-partie (SP2), et présentant respectivement des quatrième et cinquième raideurs, avec ladite cinquième raideur strictement supérieure à ladite troisième raideur, **caractérisé en ce que** ledit insert de raidissement (IR) comprend une première paroi (PP1) ayant une section qui présente dans ladite partie intermédiaire (PI) une première diminution puis une première augmentation sur une première distance choisie de sorte que sa troisième raideur soit strictement inférieure à ladite cinquième raideur.

2. Véhicule selon la revendication 1, **caractérisé en ce que** ladite quatrième raideur est strictement supérieure à ladite troisième raideur.

3. Véhicule selon la revendication 1 ou 2, **caractérisé en ce que** ledit insert de raidissement (IR) comprend une seconde paroi (PP2) ayant une section qui présente dans ladite partie intermédiaire (PI) une seconde diminution puis une seconde augmentation sur une seconde distance choisie de sorte que sa troisième raideur soit strictement inférieure à ladite cinquième raideur.

4. Véhicule selon la combinaison des revendications 1 et 3 ou 2 et 3, **caractérisé en ce que** ladite première distance est strictement supérieure à ladite seconde distance.

5. Véhicule selon la combinaison des revendications 1 et 3 ou 2 et 3, **caractérisé en ce que** lesdites première et seconde distances sont identiques.

6. Véhicule selon l'une des revendications 1 à 5, **caractérisé en ce que** ledit insert de raidissement (IR) s'étend dans ladite première partie (P1) jusqu'à une distance choisie de ladite ligne de soudure (LS).

7. Véhicule selon l'une des revendications 1 à 6, **caractérisé en ce que** ledit élément (ES) est un pied milieu.

## Patentansprüche

1. Fahrzeug (V) mit einer Struktur (SV), die mindestens ein Element (ES) umfasst, das erste (P1) und zweite (P2) Abschnitte umfasst, die sich an einer Schweißlinie (LS) gegenseitig verlängern und eine erste Steifigkeit bzw. eine zweite Steifigkeit aufweisen, die wesentlich größer ist als die erste Steifigkeit, wobei die ersten (P1) und zweiten (P2) Abschnitte zusammen ein Gehäuse (LI) definieren, das einen Versteifungseinsatz (IR) aufnimmt, der sich zu beiden Seiten der Schweißlinie (LS) erstreckt, um von der letzteren (LS) von den Belastungen wegzubewegen, denen das Element (ES) in diesem Fall ausgesetzt ist Stoßdämpfer, versetzt in dem ersten Teil (P1), wobei der zweite Teil (P2) des Elements (ES) einen ersten Unterteil (SP1), der den ersten Teil (P1) verlängert, und einen zweiten Unterteil (SP2), der den ersten Unterteil (SP1) verlängert, umfasst, und wobei der Versteifungseinsatz (IR) einen Zwischenteil (PI) umfasst, der sich in dem ersten Unterteil (SP1) befindet, eine dritte Steifigkeit aufweist und zwischen einem ersten (PE1) und einem zweiten (PE2) Endteil angeordnet ist, die sich jeweils in dem ersten Teil (P1) und dem zweiten Teil befinden Teilbereich (SP2), der eine vierte bzw. fünfte Steifigkeit aufweist, wobei die fünfte Steifigkeit wesentlich größer als die dritte Steifigkeit ist, **dadurch gekennzeichnet, dass** der Versteifungseinsatz (IR) eine erste Wand (PP1) mit einem Querschnitt aufweist, der in dem Zwischenbereich (PI) eine erste Abnahme und dann eine erste Zunahme über eine erste gewählte Strecke aufweist, sodass seine dritte Steifigkeit wesentlich geringer als die fünfte Steifigkeit ist.

2. Fahrzeug nach Anspruch 1, **dadurch gekennzeichnet, dass** die vierte Steifigkeit streng größer als die dritte Steifigkeit ist.

3. Fahrzeug nach Anspruch 1 oder 2, **dadurch gekennzeichnet, dass** der Versteifungseinsatz (IR) eine zweite Wand (PP2) mit einem Querschnitt aufweist, der in dem Zwischenabschnitt (PI) eine zweite Abnahme und dann eine zweite Zunahme über eine zweite Strecke aufweist, die so gewählt ist, dass ihre dritte Steifigkeit streng geringer ist als die fünfte Steifigkeit.

4. Fahrzeug nach der Kombination der Ansprüche 1 und 3 oder 2 und 3, **dadurch gekennzeichnet, dass** der erste Abstand streng größer als der zweite Abstand ist.

5. Fahrzeug nach der Kombination der Ansprüche 1 und 3 oder 2 und 3, **dadurch gekennzeichnet, dass** der erste und der zweite Abstand identisch sind.

6. Fahrzeug nach einem der Ansprüche 1 bis 5, **dadurch gekennzeichnet, dass** sich der Versteifungseinsatz (IR) in dem ersten Teil (P1) bis zu einem gewählten Abstand von der Schweißlinie (LS) erstreckt.

7. Fahrzeug nach einem der Ansprüche 1 bis 6, **dadurch gekennzeichnet, dass** das Element (ES) ein Mittelfuß ist.

## Claims

1. Vehicle (V) comprising a frame (SV) comprising at least one item (ES) comprising first (P1) and seco nd (P2) portions extending mutually in level of a welding line (LS) and having respectively a first stiffn ess and a second stiffness strictly greater than said first stiffness, said first (P1) and second (P2) porti ons together defining a housing (LI) housing a stiffening insert (IR) extending on either side of said we lding line (LS) in order to move away from the latter (LS) from the constraints to which said item (ES) i s subjected In the event of an impact, by shifting them in said first part (P 1), said second part (P 2) of the item (ES) comprising a first subpart (SP 1), extending said first part (P 1), and a second subpart (S P 2), extending said first subpart (SP 1), and said stiffening insert (IR) comprises an intermediate part (PI), located in said first subpart (SP 1), having a third stiffness, and inserted between first (PE 1) and second (PE 2) end parts respectively located in said first part (P 1) and said second subpart (SP2), and having respectively fourth and fifth stiffnesses, with said fifth stiffness strictly greater than said third stiffness, **characterised in that** said stiffening insert (IR) comprises a first wall (PP1) having a section w hich has in said intermediate part (PI) a first decrease and then a first increase over a first distance ch osen so that its third stiffness is strictly less than said fifth stiffness.

2. Vehicle according to claim 1, **characterised in that** said fourth stiffness is strictly greater than said t hird stiffness.

3. Vehicle according to Claim 1 or 2, **characterised in that** the said stiffening insert (IR) comprises a se cond wall (PP2) having a section which has, in the said intermediate part (PI), a second decrease and then a second increase over a second distance chosen so that its third stiffness is strictly less than the said fifth stiffness.

4. Vehicle according to the combination of claims 1 and 3 or 2 and 3, wherein said first distance is stri ctly greater than said second distance.

5. Vehicle according to the combination of claims 1 and 3 or 2 and 3, wherein said first and second di stances are identical.

6. Vehicle according to one of Claims 1 to 5, **characterised in that** the said stiffening insert (IR) extends in the said first part (P1) up to a chosen distance from the said welding line (LS).

7. Vehicle according to one of Claims 1 to 6, **characterised in that** the said item (ES) is a middle foot.
